# EUROPEAN PATENT APPLICATION

(11) **EP 4 730 669 A1**
(43) Date of publication of application: **22.04.2026**
(21) Application number: 25208897.6
(22) Date of filing: 15.10.2025
(51) Int. Cl.: H04B 7/185

(54) **WIRELESS COMMUNICATION SYSTEM FOR MOVING VEHICLES USING LEO SATELLITE NETWORK**

(30) Priority: 18.10.2024 SE 2451034
(71) Applicant: ICOMERA AB, 411 03 Göteborg (SE)
(72) Inventor: KARLSSON, Mats, 411 03 Göteborg (SE)
(74) Representative: Lind Edlund Kenamets Intellectual Property AB

(57) **Abstract**

A wireless communication system for wireless communication with a mobile router in a moving vehicle, such as a train, via at least two external wireless networks, a first external wireless network comprising a plurality of low earth orbit, LEO, satellites, and a second external wireless network enabling direct communication between said moving vehicle and terrestrial base stations. The router is arranged to simultaneously communicate with the two external wireless networks thereby providing at least one LEO communication link and at least one terrestrial link. The system further comprises an aggregation server, enabling aggregated communication between over the communication links. The quality, such as latency, of the LEO communication link(s) is evaluated and used to assign data streams to the communication links.

## Description

### TECHNICAL FIELD OF THE INVENTION

The present invention relates to a method and system for wireless communication between a router onboard a moving vehicle and a terrestrial aggregation server.

### BACKGROUND

There is an ever growing need to provide fast and reliable wireless communication to and from moving vehicles, and in particular public transportation vehicles, such as trains, busses, ships, aircrafts, etc. The present applicant, Icomera, has developed a unique mobile data technology platform that is now commonly used for wireless communication systems for trains and other moving vehicles. In this known system, various communication technologies and links are used, and the system automatically selects among the available terrestrial channels and uses the most cost-effective combination that fulfils the users' availability, bandwidth and reliability requirements. The users inside the vehicle connect to the wireless network system via their own devices, such as laptops, smartphones, etc through an internal WLAN (Wireless Local Area Network) inside the vehicle.

EP1175757 and EP2943011 by the same applicant describe two methods whereby many of these weaknesses resulting from wireless communication may be overcome through the concurrent use of multiple wireless links. Optimizations can hereby be based on e.g. latency, bandwidth, and other performance parameters, but also on e.g. cost.

However, as an alternative approach, it has been proposed to use Low Earth Orbit (LEO) satellites, which have now become a suitable alternative for communication to and from a moving vehicle.

Low earth orbit (LEO) satellites are satellites operated in LEO, which is an earth-centered orbit with an altitude of 2000 km or less, and typically at 500-1200 km, such as at about 1000 km. Thus, LEO satellites operate at approximately 1/3 of the radius of the earth or lower, and with at least 11.25 periods per day - i.e. with an orbital period of less than 128 minutes. Compared to conventional, geostationary satellites (which are typically at an altitude of 36,000 km), the LEO satellites require much lower energy and cost for satellite placement, and also have much lower latency, due to the relative closeness to the earth. In geostationary satellites, the latency is about 600 ms, whereas LEO satellites typically have a latency of 20-40 ms. On the other hand, LEO satellites have a relatively small momentary field of view, and are only able to observe and communicate with a fraction of the earth at a time. To this end, LEO satellites are operated in networks comprising a multitude of LEO satellites, so called constellations, in order to provide continuous coverage. Currently, several operators, such as SpaceX and OneWeb have operational LEO satellite communication constellations, with a continuous increase in operational LEO satellites in each of them, and several other operators, such as Amazon, Telesat and many others, are on their way of providing operational LEO satellite constellations. The new constellations are, or will be, mega-constellations, each comprising thousands of LEO-satellites. In each constellation, the LEO-satellites communicate with terrestrial base stations, which may in turn be connected to terrestrial communication networks. Further, the LEO-satellites may communicate between satellites, to forward data directly between them.

In order to make more efficient use of LEO satellite communication, it has been proposed in US 12 034 519, by the same applicant, to simultaneously communicate through several LEO satellites. This increases the throughput and reliability of the wireless communication.

However, even communication with LEO satellites is sometimes limited in performance and coverage, and also severely limited by the frequent need for hand-overs between the satellites. In addition, communication between a moving vehicle and LEO satellites may also be limited or stopped by naturally occurring hinders, such as trees and other vegetation, rocks and mountains, buildings, tunnels, etc. The satellite communication may also be deteriorated by dirt and contaminations on the antennas, such as leaves, dust, etc.

At the same time there is a current rising trend of greater demand for communication capacity, due to e.g. increased use of streaming media, which requires far more data per minute of journey per passenger than older uses of the Internet, such as browsing text- and image-based sites like Facebook, or checking and responding to email.

There is therefore a need for an improved method and system for communicating to and from moving vehicles, allowing increased capacity, capacity utilization, quality and/or cost-efficiency. Even though the above discussion is primarily focused on trains, similar situations and problems are encountered in many other types of moving vehicles, and in particular moving passenger vehicles, such as in ships, busses, aircrafts, etc.

### SUMMARY OF THE INVENTION

Thus, in view of the above, there is a need for an improved wireless communication system and method for communication between a router onboard a moving vehicle, such as a train, and a terrestrial communication server.

This object is achieved with a wireless communication system and method as defined in the appended claims.

According to an aspect of the present invention, there is provided a wireless communication system for wireless communication with a mobile router in a moving vehicle, such as a train, via at least two external wireless networks, a first external wireless network comprising a plurality of low earth orbit, LEO, satellites, and a second external wireless network enabling direct communication between said moving vehicle and terrestrial base stations,
wherein the mobile router is arranged, at least periodically, to simultaneously communicate with the two external wireless networks thereby providing at least two concurrently useable separate communication links: at least one LEO communication link provided through said first external wireless network and at least one terrestrial link provided through said second external wireless network;
the system further comprising an aggregation server, enabling
   aggregated communication between said mobile router and said aggregation server over said at least two communication links, the communication thereby at the end points appearing as a single link;
the system further comprising at least one controller being connected to, or arranged in, at least one of the mobile router and the aggregation server, the controller(s) being arranged to evaluate the quality of at least the LEO communication link(s), and to assign data streams to said communication links at least partly based on said evaluated quality, wherein said evaluated quality is at least one of latency and data packet loss, and the evaluation is based on measured times until automated responses are received from requests arranged to trigger determinable automated responses, where the requests are repeatedly sent from said aggregation server to said router and/or from said router to said aggregation server via said data links.

According to another aspect of the invention, there is provided a method for wireless communication method between a mobile router in a moving vehicle, such as a train, and an aggregation server via at least two external wireless networks, a first external wireless network comprising a plurality of low earth orbit, LEO, satellites, and a second external wireless network enabling direct communication between said moving vehicle and terrestrial base stations, the method comprising:
providing at least two concurrently useable separate communication links: at least one LEO communication link provided through said first external wireless network and at least one terrestrial link provided through said second external wireless network;
enabling aggregated communication between said mobile router and said aggregation server over said at least two communication links, the communication thereby at the end points appearing as a single link;
evaluating the quality of at least the LEO communication link(s) in at least one controller, the controller(s) being connected to, or arranged in, at least one of the mobile router and the aggregation server, wherein said evaluated quality is at least one of latency and data packet loss, and the evaluation is based on measured times until automated responses are received from requests arranged to trigger determinable automated responses, where the requests are repeatedly sent from said aggregation server to said router and/or from said router to said aggregation server via said data links; and
assigning, by the controller(s), data streams to said communication links at least partly based on said evaluated quality.

For communication with the LEO satellites, at least one satellite antenna is provided on the moving vehicle, and in particular a low Earth Orbit (LEO) satellite antenna. As discussed above, low earth orbit (LEO) satellites are satellites operated in LEO, which is an earth-centered orbit with an altitude of 2000 km or less, and typically at 500-1200 km, such as at about 1000 km. Thus, LEO satellites operate at approximately 1/3 of the radius of the earth or lower, and with at least 11.25 periods per day - i.e. with an orbital period of less than 128 minutes. Compared to conventional, geostationary satellites (which are typically at an altitude of 36,000 km), the LEO satellites require much lower energy and cost for satellite placement, and also have much lower latency, due to the relative closeness to the earth. In geostationary satellites, the latency is about 600 ms, whereas LEO satellites typically have a latency of 20-40 ms. The satellite antennas may e.g. be arranged to communicate with LEO satellites of any one of the presently functional constellations, such as SpaceX and OneWeb, and/or constellations planned by Amazon, Telesat, etc.

The at least one satellite antenna is preferably directional antennas, and preferably actively controlled antennas, and most preferably a phased array antenna.

Preferably, there are more than one satellite antenna, each antenna enabling a separate communication link. Since the distance to LEO-satellites is much smaller than to geostationary satellites, the antennas can be made very small, lightweight and affordable. For example, the antennas may of the size as a palm. This reduces the overall costs of the system, and also makes it possible to use many antennas on the vehicle. Thus, the vehicle may be provided with at least 2 simultaneously useable directional satellite antennas, and preferably at least 3. In one embodiment, the vehicle may be provided with at least 4 simultaneously useable directional satellite antennas, and preferably at least 5, and most preferably at least 6, such as 6-8 antennas. The antennas may be arranged on the roof of the vehicle, and may be arranged separated over at least the length of the vehicle, to reduce interference.

By separating the satellite antennas over the vehicle, and in particular by the arrangement of the satellite antennas in different carriages, and preferably separated by at least one intermediate carriage, the chance of a clear sky, and good transmission and reception properties, for at least one of the satellite antennas increases.

The provision of several independently operable satellite antennas is also very useful for establishing communication via several simultaneously useable LEO links, which is a great advantage in respect of throughput, reliability, and other transmission properties. The use of several satellite antennas for communication can e.g.be made in the way disclosed in US 12 034 519, by the same applicant, said document hereby being incorporated in its entirety by reference.

According to an embodiment, the moving vehicle may comprise at least one router for communication with at least one remote server, in particular the aggregation server, through at least one external network comprising a plurality of low earth orbit, LEO, satellites. Preferably, the router is arranged to establish connection with the remote server/aggregation server via the LEO satellites over at least two separate communication links.

The at least one terrestrial remote server may comprise an aggregation server, or alternatively be connected to the terrestrial remote server, and the router may be configured for receiving and transmitting wireless data to and from said aggregation server, using aggregated communication over said at least two separate communication links, the communication thereby at the end points appearing as a single link.

The "router" is a networking router, which is a machine that forwards data packets between networks, on at least one data link in each direction. The router may be a mobile access router, and preferably a mobile access and applications router.

In each constellation, the LEO-satellites communicate with terrestrial base stations, which may in turn be connected to terrestrial communication networks. Further, the LEO-satellites may communicate between satellites, to forward data directly between them. In many LEO-satellite networks, such as in the SpaceX and OneWeb networks, communication between the satellites are often made in the Ka-band, whereas communication with user apparatuses are often made in the Ku-band. However, in some LEO-satellite networks, such as in the planned Telesat network, all communication is made in the Ka-band. Naturally, other communication bands are also feasible.

It has been realized that much more efficient communication via LEO-satellites can be accomplished by using two, and preferably even more, simultaneous links. This can be used to distribute different data streams on different links to make better to increase capacity and performance of the communication. It may also be used for aggregated communication, where a data stream is divided into sub-streams, which are forwarded on different links, and then recombined in an aggregation server. Such aggregated communication also increases the overall capacity and performance, and also provides greatly improved reliability.

In addition to the one or more LEO communication links, the wireless communication system here enables communication directly through the terrestrial base stations of the second external wireless network, through at least one terrestrial link.

It has been found that this is a very efficient measure to increase the capacity and coverage of the wireless communication system. LEO satellite networks is generally cost-efficient to use, with a good coverage and throughput. However, at places the coverage may still be poor and insufficient. Communication with the LEO satellites may also be impaired by dirt and contaminations on the antennas, such as dust, leaves, etc. The communication performance may also be deteriorated due to environmental conditions, such as buildings, tunnels, trees, mountains, etc, and also due to clouds and other sky conditions.

Further, the performance of LEO satellites generally deteriorates rapidly when the traffic load becomes over a certain limit. Above this limit, the latency and increases dramatically and consequently also the frequency of data packet losses.

By the provision of the possibility of also using communication through the terrestrial communication link(s) when the need arises, i.e. when the evaluated quality of the LEO communication link(s) has deteriorated, it becomes possible to use the LEO communication links as a default, and for most of the communication, and at the same time provide a back-up in the form of the terrestrial communication links to take over, wholly or partly, when the need arises. A very limited use of the terrestrial communication link(s) may hereby ensure that the coverage, speed and throughput is greatly improved.

By the simultaneous use of multiple links, and in particular the combination of both at least one LEO communication link and at least one terrestrial communication link, a much higher capacity is obtained compared to when only single links are used. The redundancy and reliability of the system is also improved, since the communication system will still be working even if the LEO communication link would temporarily malfunction or be deteriorated, if an operator is temporarily out of operation, and the like. The coverage is also greatly improved.

By the simultaneous use of multiple links, the communication may be controlled based on the varying characteristics of the links, and in particular packet loss (intermittent failure for packets of data to arrive) and latency (round-trip response time, hence responsiveness).

The use of multiple links also alleviates the problems occurring at handovers between the satellites, since the router in the moving vehicle will already be connected to at least one additional link as a back-up during every handover.

The network formed by the moving vehicle, the multiple and simultaneously useable LEO communication link(s) and terrestrial communication link(s), and the aggregation server, may be seen as a mesh network, where nodes non-hierarchically connect to many other nodes.

In an embodiment, the assigning of data streams to said communication links is based solely on said evaluated quality. This provides a simple, fast and efficient control for the system. However, it may alternatively be contemplated to base the assigning of data streams to said communication links also on other measurable parameters.

In an embodiment, the controller(s) is/are arranged to evaluate the quality by comparing the latency and/or data packet loss to determined threshold level(s). These thresholds may be static and predetermined, but may also be set dynamically, e.g. based on an average over a certain preceding time period. In an embodiment, the controller(s) may be arranged to solely assign data streams to the LEO communication link(s) unless the evaluated quality of the at least one LEO communication link is determined to be too low. In particular, the controller(s) may be arranged to solely assign data streams to the LEO communication link(s) unless the evaluated quality of the at least one LEO communication link is determined to exceed said threshold level(s).

A data packet loss may be determined to have occurred when the measured times until automated responses are received from requests arranged to trigger determinable automated responses exceed a determined data packet loss threshold.

In an embodiment, the router may be arranged to establish connection with the remote server via the LEO satellites over at least two separate LEO communication links. The router may be arranged to simultaneously communicate through several LEO communication links, and e.g. with LEO satellites via at least two operators, thereby providing separate communication links. By the use of multiple operators, the capacity is increased, and also the coverage, reliability and redundancy.

In an embodiment, the router is arranged to simultaneously communicate via at least two different LEO satellites, said at least two LEO satellites preferably being in communication with different terrestrial base stations, which in turn are connected to the aggregation server. These LEO satellites may be operated by different operators. However, additionally or alternatively, the router may be arranged to simultaneously communicate via at least two different LEO satellites operated by the same operator. Such use of multiple satellites from the same operator will also increase capacity and redundancy, and will also further alleviate the problems related to handovers. It will also reduce the boresight problems often experienced when communication is made only through a single link.

One or more modem may be arranged to establish communication with each operator. Further, a modem may be connected to only one antenna, or be connected to two or more antennas. Thus, each communication link may be established over only one antenna, or over two or more antennas. Further, antennas may also be shared among several modems.

The router is preferably connected to an internal network on-board the rail-bound vehicle, for connection to on-board client devices, and preferably a wireless internal network, and most preferably a wireless internal network operated in accordance with an IEEE 802.11 standard, such as WiFi. To this end, one or more access points may be provided inside the train, and be connected to the router via a wire, such as an ethernet cable, or through a wireless connection.

The router may be configured for receiving and transmitting wireless data to and from said aggregation server, using aggregated communication over the at least two separate links, i.e. in particular the LEO communication link(s) and the terrestrial communication link(s), and the router further being accessible by a plurality of client devices onboard said vehicle.

Aggregation means that multiple wireless links are aggregated for simultaneous use by means of routing traffic on said links through a shared virtual connection to and from the gateway, which is a stationary computer acting as a server - an aggregation server - on the Internet. This method, hereinafter referred to as "aggregation", greatly improves the reliability of high-bandwidth wireless communication for the vehicles.

Aggregation is the state and process whereby data streams between on-board clients and external stationary servers are jointly managed, preferably by a special protocol, between the router and the aggregation gateway/aggregation server. In reality, aggregated traffic passes through ISP infrastructure servers on its way to and from the aggregation gateway, but the virtual connection makes it appear to a third party, such as a web site, that all communications are taking place between that site and the aggregation gateway. This is advantageous because the aggregation gateway has a single, stable IP address and because streams of data can be moved from one physical link to another with minimal disruption, since the various links can be monitored both from the router and from the gateway.

The second external wireless network may operates via at least one cellular network standard, such as one or more of 3G, 4G or 5G standards. However, the second external wireless network may, additionally or alternatively, operate through a WLAN standard, and most preferably in compliance with the IEEE 802.11 standard (which may also be referred to as WiFi). However, it is also possible to use other wireless communication protocols/technologies, such as LTE, GSM-R, GSM, DVB-T, HSPA, EDGE, 1X RTT, EVDO, LTE, etc.

"Data streams" are traffic in need of routing. A stream is in the context of the present application to be seen as any and all communication with a specific combination of ultimate source and ultimate destination IP addresses and network ports, or whatever the equivalent of this would be in a networking scheme where these identifiers are not used or not sufficiently distinguishing. A stream is "created" when any entity on one side of the system seeks to communicate with any entity on the other side, using any specific combination of ports. Packets in a stream need not be inspected. For the purposes of this invention, a stream may be considered "destroyed" an arbitrary period of time (seconds or tens of seconds) after data has ceased to flow in it.

"Requests arranged to trigger a determinable automated response" are any active sending of a request or other provocation across a network, through a specific link, with the expectation of receiving a predetermined response, and preferably under a timeout or corresponding safeguard. The specific implementation of such requests may vary, depending on what information that should be determined, communication protocols, target host location, the amount of traffic sent and solicited, and the precise limit set by the timeout function. Obviously, factors external to the individual test, such as the interval between repetitions of the same type of test, is also a potential subject of fine tuning.

Measurement of the time until the triggered automated responses are received may be performed in various ways. One way is to measure the exact time (latency) between sending the request and receiving the response. However, the time may also be determined by determining whether the response is received within one or several time frames. For example, it may be determined whether a response is received before a determined time out. This provides a rough estimate of the time. A finer estimate may be obtained by alteration of the time frame(s), by alteration of the size of the sent request, e.g. by adding extra padding, and the like.

The assignment of a communication link is preferably made once for each data stream. However, re-assignment for data streams that have failed may also be made. Further, data streams may also be split among two or more data links, e.g. by transferring a first part of a data stream on one communication link to begin with, and then continue the transfer of the rest of the data stream on another communication ata link, based on a re-assignment decision. Re-selection and/or re-assignment may also be made based on other criteria than complete failure of the presently used data link, such as when the evaluated quality of the link presently used is significantly deteriorated, falls below a certain threshold, or the like.

The evaluation is preferably made by evaluating the quality of said data links on a host layer by repeatedly sending requests arranged to trigger a determinable automated response to said stationary communication server via said communication links, and measure the time until the triggered automated responses are received. It has been found that this is a very efficient way to determine the relevant characteristics of a communication link empirically. The purpose of this is to detect and work around problems, not to diagnose them. The tests therefore work on the higher layers of abstraction - the host layers of the OSI model - to probe the soundness of the lower layers.

The test methods may be complemented by knowledge of the nominal maximum throughput (hereafter NMT) assigned to the hardware substrate of each communication link, by type

The empirical evaluation tests are repeated regularly. For example, a new instance of each test on each link to be tested would typically be started at intervals of a few seconds. These intervals may further be adjusted on the basis of probabilities that changes in the router's situation, such as its physical movement, have made older results irrelevant. However, tests should preferably not be run so often that the amount of data transferred by them significantly degrades the primary function of the router, through congestion.

The evaluation tests are, in accordance with an embodiment, made only on the LEO communication link(s). However, the quality of the terrestrial communication link(s) may be tested and evaluated in the same way.

The assignment of data streams to the communication links at least partly based on the evaluated quality may occur in various ways. In a preferred embodiment, the available communication links are connected to merit values, e.g. integer merit values, based on the evaluated quality, in turn based on the measured test results, and optionally also based on the nominal maximum throughput (NMT) of the links. Preferably, separate merit values are assigned in each direction of traffic to each link. Links may then be weighed against each other at least partly, and preferably entirely, by these merit values. Thus, in one embodiment, all streams to links may be assigned in linear proportion to the merit values of the links.

Alternatively, all streams may be assigned solely to the communication link having the best merit value.

In an embodiment, only the merit value of the LEO communication link(s) are changed as a result of the evaluated quality, whereas the merit value of the terrestrial communication link(s) have a fixed value. In such a case, the fixed value for the terrestrial communication link(s) may be set to be lower than the highest obtainable merit value for the LEO communication link(s), but higher than a lowest obtainable merit value for the LEO communication link(s). Hereby, the LEO communication links would be favored, and solely or primarily used, at times when the evaluated quality of the LEO communication link(s) is/are good, and the terrestrial communication link(s) used only, or primarily, when the evaluated quality of the LEO communication link(s) is/are poor.

The present invention provides very efficient and dynamic use of the capacity of the available data links, and is also cost-efficient to implement and utilize. For example, the method/system of the invention needs no configuration beyond possible knowledge of NMT and the particulars of the tests to be applied, such as ICMP targets. It is highly international, because link evaluation takes place on the host layers, agnostic of local peculiarities. Similarly, it works with any type of data link that supports TCP/IP or any comparable protocol stack, in any combination. Further, since requests arranged to trigger a determinable automated response to said stationary communication server via the data links are quick and easy to measure, and can be repeated at relatively high frequency, the link assignment becomes very quick, dynamic and adaptive.

The evaluation of the quality of the links may be determined solely based on the measured responses to the requests sent out, used to evaluate the quality in terms of latency and data packet loss, and the assignment of data streams to the data links may be made solely based on this evaluated quality. However, other static or dynamic parameters may also be brought into consideration for evaluating the quality of the links and/or for making the assignments. For example, parameters such as costs assigned to the different links, bandwidth, signal quality (e.g. signal to noise ratio), number of streams being assigned to the links, etc may be considered. Parameters such as packet loss and throughput may also be considered. Information about such additional parameters may be determined by additional tests. However, information about these parameters may also be obtained from other sources. Similarly, the routing according to the present invention can take other factors into account, including more categorical considerations wherein available links are tiered, limiting the set of available links at any given moment, regardless of their merit values.

In case several tests are performed to evaluate link quality, such tests can be combined in any order, serially or in parallel.

The requests triggering a determinable automated response may be requests to a domain name system (DNS) server. A WWAN Internet service provider (ISP) will normally offer the addresses of one or more domain name system (DNS) servers, as an essential service. DNS queries can be bound to each link, to attempt to resolve a largely arbitrary domain name using one of the ISP's provided servers, or any other. Failure to respond within a given time frame is taken to mean either a general problem transferring the small amount of data, or a more specific problem with the queried DNS server.

Alternatively, the request triggering a determinable automated response may use the ICMP protocol. In particular, it is preferred that the requests triggering a determinable automated response are ECHO_REQEST datagrams, used to trigger an ECHO_RESPONSE from an arbitrary remote host. Further, the ECHO_REQESTs may be provided with a variable amount of extra padding data. Such echo requests is often referred to as "ping" or "pinging".

Unpadded ICMP requests are likely to receive a very high priority, because ICMP is a standard test of network latency. When highly prioritized, it gives the illusion of good overall responsiveness, while payload data in other types of containers gets a lower priority and relatively poor performance in case of congestion. To provide further information, and to enable even better use of the available links, ICMP packets can be padded with extra bytes of data. This provides a simple, universally recognized method of loading down a link with a very precise burst of traffic, and timing the response. The fact that one and the same packet constitutes the load and is timed is the greatest virtue of this test, because it measures how heavy traffic on a link will actually be treated.

Alternatively, or additionally, the request triggering a determinable automated response may be included in payload data sent between the router and the aggregation server. The request triggering a determinable automated response may in such a case be included in a header added to the payload packets for ensuring aggregation, i.e. in a header added to the data packets for control of the aggregation. The triggered response may also be added to a header of payload data sent in the opposite direction. When using payload for sending the request triggering an automated response, the requests may be added in all headers, i.e. in essentially all packets, or in some selected packets, such as once for every stream. Adding the request for triggering a determinable automated response to payload data packets, and in particular to aggregation control headers, has been found to be very efficient, fast and reliable, and in particular for determining quality separately for the uplink and downlink communication. In particular, it enables very precise measurement of relative differences in e.g. latency between different packets.

The evaluation is preferably made based on an average time for a predetermined number of requests to said stationary communication server via said communication link(s) for said automated response to be received, said predetermined number of requests preferably being in the range of 3-10 requests, such as 5 requests.

In case the time is measured by determining if a response is received within a certain time frame, or within certain time frames, the evaluation can be based on determination that a predetermined number of responses being obtained within one or several time frames.

The requests are preferably sent at least every 5 second, and preferably at least every 3 second, and more preferably at least every 1 second. In a preferred embodiment, the requests may be sent even more frequently, such as in every data stream, or even in every data stream. The requests may be sent at least every 10 ms, or at least every 5 ms, or at least every 1 ms.

The frequency of sending requests may also be adjustable in accordance with at least one other quality parameter of the links. For example, the frequency may be adjusted in accordance with the magnitude and/or volatility of the signal-to-noise ratio (SNR) of the links. Thus, the frequency may be increased when the volatility of the SNR increases and/or when the SNR decreases, e.g. below a certain threshold. Correspondingly, the frequency may be decreased when the volatility is lower and/or when the SNR is higher. The adjustable frequency makes the evaluation and assignment steps more dynamic and adjustable when the SNR conditions are bad.

The moving vehicle is preferably a rail-bound vehicle, such as a train. However, the wireless communication system may also be used on other types of moving vehicles, such as on busses, ships and aircrafts.

### BRIEF DESCRIPTION OF THE DRAWINGS

For exemplifying purposes, the invention will be described in closer detail in the following with reference to embodiments thereof illustrated in the attached drawings, wherein:
Fig 1 is a schematic illustration of a wireless communication system in accordance with an embodiment;
Fig 2 is a more detailed block diagram of the wireless communication system of Fig 1;
Fig. 3 is a schematic flow chart illustrating an evaluation sequence in accordance with an embodiment;
Fig. 4 is a schematic flow chart illustrating an evaluation sequence using adaptive padding in accordance with another embodiment;
Fig. 5 is a schematic flow chart illustrating an evaluation sequence using requests embedded in payload data streams.

### DETAILED DESCRIPTION OF CURRENTLY PREFERRED EMBODIMENTS

In the following detailed description, preferred embodiments of the present invention will be described. However, it is to be understood that features of the different embodiments are exchangeable between the embodiments and may be combined in different ways, unless anything else is specifically indicated. Even though in the following description, numerous specific details are set forth to provide a more thorough understanding of the present invention, it will be apparent to one skilled in the art that the present invention may be practiced without these specific details. In other instances, well known constructions or functions are not described in detail, so as not to obscure the present invention. In the following examples, an embodiment related to a train is provided. However, it is to be acknowledged by the skilled reader that the method and system are correspondingly useable on other rail-bound moving vehicles, such as subway vehicles, trams, and also on other types of moving vehicles, such as ships, busses, aircrafts, etc.

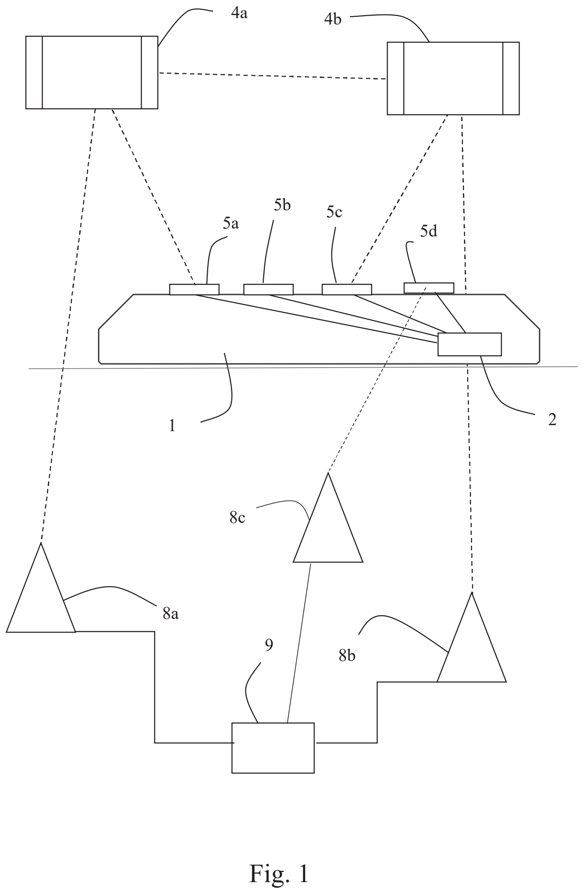

In Fig. 1, a schematic illustration of a wireless communication system is illustrated. The system comprises a router 2, arranged in a rail-bound vehicle, here a train 1. In the illustrative embodiment, a single router is provided, but more than one router may also be provided.

The router in the train may be arranged to communicate with at least one terrestrial remote server 9, an aggregation server, through at least one external LEO network, comprising a plurality of low earth orbit, LEO, satellites 4a, 4b. In an embodiment, the router is arranged to establish connection with the remote server 9 via the LEO satellites 4a, 4b over at least two simultaneously useable, separate LEO communication links.

The LEO satellites may communicate between each other, and also communicates with terrestrial base stations 8a, 8b, connected to terrestrial networks, in turn connected to the aggregation server 9.

The communication through the LEO satellites may occur over several communication links simultaneously, and e.g. by aggregated communication. To this end, at least one of the terrestrial remote servers may comprise an aggregation server, and the router is configured for receiving and transmitting wireless data to and from said aggregation server, using aggregated communication over said at least two separate communication links, the communication thereby at the end points appearing as a single link.

The router in the train may further be arranged to communicate with the aggregation server 9 through at least one external terrestrial network, by communication directly with a terrestrial base station 8c. In an embodiment, the router may be arranged to establish connection with the aggregation server 9 via several terrestrial base stations over at least two simultaneously useable, separate terrestrial communication links.

The terrestrial network may be operated in accordance with a cellular network standard(s), such as in accordance with 3G, 4G or 5G, or a Wireless Local Area Network (WLAN) standard, such as an 802.11 standard.

The network formed by the train, the one or more LEO-satellites, the simultaneously useable one or more terrestrial base station in direct communication with the router, and the aggregation server, may form a mesh network, where nodes non-hierarchically connect to many other nodes.

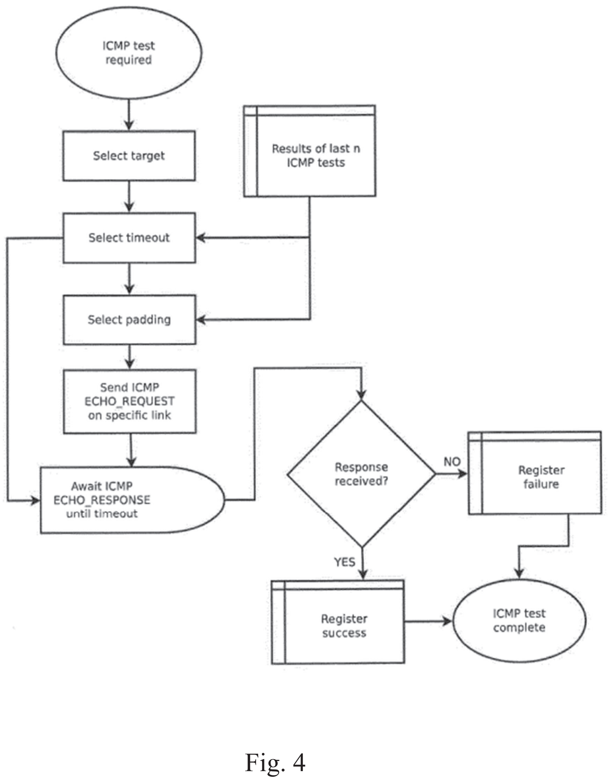

The train is preferably provided with a plurality of simultaneously useable directional satellite antennas 5a-c, and preferably electronically steered patch array antennas, each antenna enabling a separate communication link. In the illustrative example of Fig. 1, 4 simultaneously useable directional satellite antennas are provided, but fewer or more antennas may be used, such as at least 5, or at least 6. The antennas may be arranged on the roof of the train and may be arranged separated over at least the length of the train, to reduce interference. Further, one, two or more antennas 5d for communication with terrestrial base stations may also be provided. The latter antennas may also be directional, and preferably directed in a generally horizontal direction, towards the sides of the train. However, omnidirectional antennas may also be used.

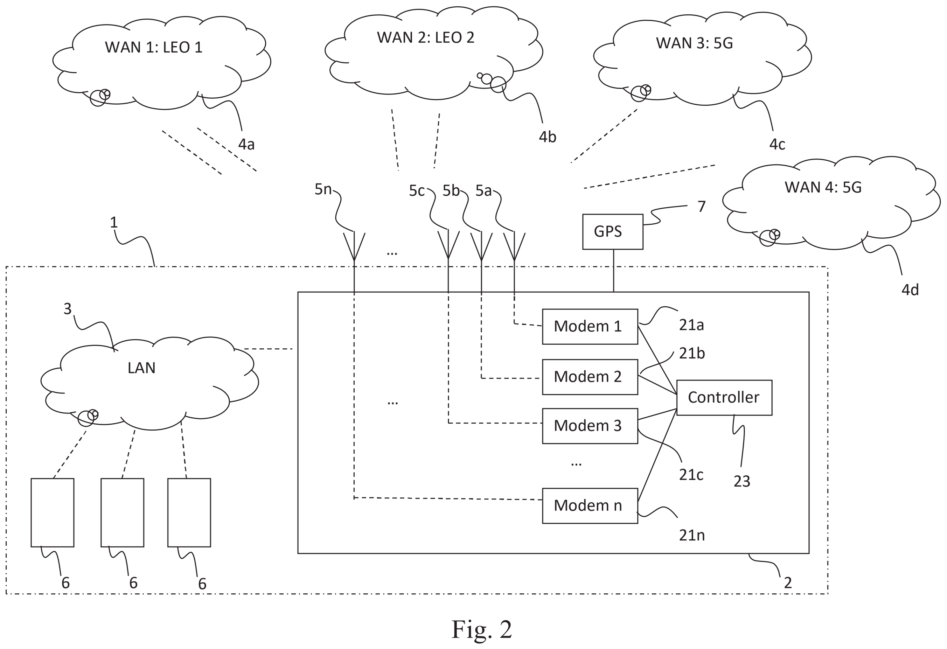

In Fig. 2 a schematic illustration of a train 1 having a communication system is provided. The communication system comprises a data communication router 2 for receiving and transmitting data between an internal local area network (LAN) 3, one or several WANs, 4a-b, communicating through LEO satellites, and one or several WANs 4c-d communicating directly through terrestrial base stations, e.g. over 5G. Communication to and from the LEO satellites and the terrestrial base stations is provided through one or several antennas 5 a-n on the train roof. Preferably, two or more data links are available between the train and the LEO satellites and between the train and the terrestrial base stations, respectively.

The LAN 3 is preferably a wireless network, using one or several internal antennas, or access points, to communicate with terminal units 6 within the train. It is also possible to use a wired network within the train. The LAN may be set-up as wireless access point(s), e.g. using an IEEE 802.11 standard (WiFi). The client(s) 6 may be computing devices such as laptops, mobile telephones, smart phones, PDAs and so on.

The data communication router comprises a plurality of modems 21 a-n. Assignment of data streams to different LEO satellites is controlled by a controller 23. The controller is preferably realized as a software controlled processor. However, the controller may alternatively be realized wholly or partly in hardware.

The system may also comprise a global positioning system (GPS) receiver 7 for receiving GPS signals indicative of the current position of the train, and wherein the controller may be arranged to assign data streams to various data links also partly in dependence on said received GPS signals.

The transferring of data streams through different data links comprises two main steps: evaluation and assignment. Each of these permits some variability. Numerous types of tests, generating a predictable response, such as an echo, could be performed to evaluate link quality, and such tests can be combined in any order, serially or in parallel. The following are only examples.

Any of a variety of common Internet functions can be taken to indicate the usefulness of a link. For example, a WWAN Internet service provider (ISP) will normally offer the addresses of one or more domain name system (DNS) servers, an essential service. DNS queries can be bound to each link, to attempt to resolve a largely arbitrary domain name using one of the ISP's provided servers, or any other. Failure to respond within a given time frame is taken to mean either a general problem transferring the small amount of data, or a more specific problem with the queried DNS server.

If the queried DNS server belongs to the ISP, the latter will often indicate a severe problem at the ISP for that specific link. Because a DNS request typically consists of a single UDP or TCP packet going each way, this type of test is very light. The infrastructure typically prioritize DNS queries and DNS responses highly in traffic control algorithms, which is another reason why this type of test can be expected to complete very quickly, if at all. The timeout on it can therefore be set very low, producing high responsiveness. The lightness of a DNS test is both an advantage and, to some extent, a drawback. It detects qualitative problems, and is very quick. It also results in a low transfer of data, and does not strain the link, which in turn means that the tests can be repeated very frequently. However, because it does not strain the link, it is a poor indicator of quantitative performance.

Another example of an embodiment therefore uses the ICMP protocol. In this protocol, an ECHO_REQUEST datagram is used to elicit an ECHO_RESPONSE from an arbitrary remote host, preferably a very stable one.

In normal use, ICMP testing is light in the same way as DNS testing. In addition, it is easier for ISPs to prioritize ICMP in unknown ways, because it is a special protocol and does not represent an essential service. Unpadded ICMP requests are likely to receive a very high priority, because ICMP is a standard test of network latency. When highly prioritized, it gives the illusion of good overall responsiveness, while payload data in other types of containers gets a lower priority and relatively poor performance in case of congestion.

As part of the protocol, ICMP packets can be padded with extra bytes of data. This provides a simple, universally recognized method of loading down a link with a very precise burst of traffic, and timing the response. The fact that one and the same packet constitutes the load and is timed is the greatest virtue of this test, because it measures how heavy traffic on a link will actually be treated. In practice, there is often a substantial difference in how a stream of ICMP packets is treated, depending on their size. When padded packets fail to arrive under a given timeout, this is an indicator of performance problems.

The ICMP request may be sent to any type of stationary communication server accessible through the exterior network, such as a DNS server, a gateway through which the communication from the moving vehicle is transferred, a content provider server, or the like.

The two embodiments of methods for evaluation mentioned thus far can be generalized as one: any active sending of a request or other provocation across a network, through a specific link, with the expectation of receiving a response under a timeout or corresponding safeguard. Variations on this theme include factors such as protocol, target host location, the amount of traffic sent and solicited, and the precise limit set by the timeout function. Obviously, factors external to the individual test, such as the interval between repetitions of the same type of test, is also a potential subject of fine tuning.

Alternatively, or additionally, the request triggering a determinable automated response may be included in payload data sent between the router and the aggregation server. The request triggering a determinable automated response may in such a case be included in a header added to the payload packets for ensuring aggregation. The triggered response may also be added to a header of payload data sent in the opposite direction. When using payload for sending the request triggering an automated response, the requests may be added in all headers, i.e. in essentially all packets, or in some selected packets, such as once for every stream.

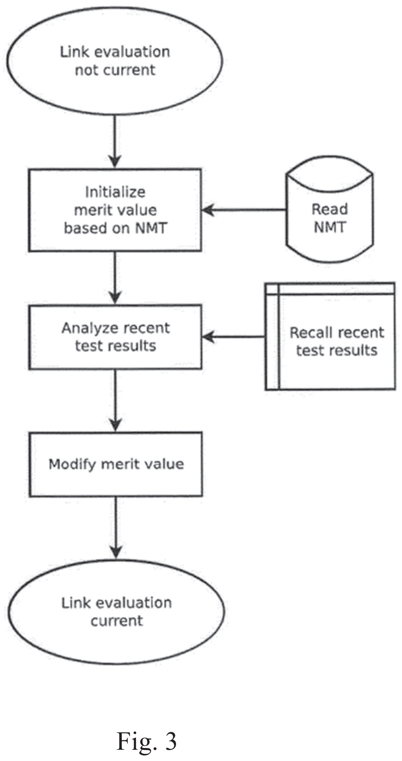

The evaluation may follow the steps as outlined in Fig 3, where the available communication links are connected with merit values, e.g. integer merit values, based on the evaluated quality, in turn based on the measured test results, and optionally also based on the nominal maximum throughput (NMT) of the links. Preferably, separate merit values are assigned in each direction of traffic to each link.

A further embodiment may also include some type of adaptive framework around one or more such variables. For instance, this could be a hysteretic influence upon the parameters of an ICMP test. Fig. 4 shows one example, where the size of the packet padding and the timeout imposed on the test are both set as a result of a simple analysis performed on the results of the last n previous tests of the same kind, on the same link. Supposing that n = 5, we may refer to the amount of successful tests in that set as s. We then let the timeout (in seconds) t = 13 - 2s and the padding (in whole bytes) p = 17000 ÷ 2(n - s). In this concrete example, it follows that the first test (s = 0) will take place with 531 bytes of padding under a timeout of 13 seconds. If this fails, the second test will be identical. If it succeeds (s = 1), the next test will be harder, with 1063 bytes of padding under a timeout of 11 seconds, and so on. If the link performs perfectly, every iteration will eventually use 17000 bytes of padding and require an ICMP response in 3 seconds or less.

This example, where the difficulty of a test varies with each success and failure in recent memory, is applicable to a wide variety of link technologies. For example, older WWAN technologies like EDGE or UMTS are unlikely to pass the most difficult form of the test consistently or at all, but can still be meaningfully evaluated by the easier forms. Under perfectly stable conditions, s will reciprocate around a "threshold of pain" on some level.

In a further embodiment, continuing from the concrete example above, the adaptive ICMP test may be both affected by and manipulate the integer s such that 0 less than or equal to s less than or equal to n. This value can also serve to influence the merit value of the link, as illustrated in Fig. 2. Given a base merit value mB, based directly on the NMT assigned to the hardware substrate of the link for traffic in one direction, the effective merit value might then be mE = mB ÷ 2(n - s) in that direction. In this example, mE is ultimately used to compare different links in the routing portion of the invention.

Links may then be weighed against each other at least partly, and preferably entirely, by these merit values. Thus, in one embodiment, all streams to links may be assigned in linear proportion to the merit values of the links. Alternatively, the streams may be assigned to the links in a "winner-takes-it-all" fashion, where all streams are assigned to the communication link(s) having the best merit value.

In an embodiment, only the quality of the LEO communication link(s) is/are evaluated. In such a case, only the merit value of the LEO communication link(s) may be varied over time, dynamically changing in accordance with the evaluated quality, whereas the merit value of the terrestrial communication link(s) may be static.

A similar methodology may also be used to re-assign data streams already assigned to a data link to another data link. This is particularly useful for lengthy data streams, such as telephone calls made by voice over IP, streaming media, video calls and the like. However, to avoid too much re-assignments, re-assignment to another data link is preferably only made when one or several predetermined criteria is/are met. For example, re-assignment may take place when one or several of the following conditions are fulfilled:
- The presently used data link has failed.
- A quality value, such as the above-discussed merit value, of the presently used data link has fallen below a predetermined minimum value.
- The quality of the presently used link has been deteriorated to a predetermined extent in relation to other available data links. For example, it may be determined that the merit value of the presently used data link has fallen below a predetermined percentage, e.g. 50 percent, of the average merit value for all the presently available data links.

In addition to these various active call-and-response methods of link evaluation, there can be many other types. For instance, link merit values can be affected by the number of streams of traffic that are already being routed over the link, by the amount of data flowing as a result of these streams relative to the NMT, by the amount of network errors reported from lower (non-host) levels of abstraction by a network interface driver, etc. Such passive methods would have the advantage of being low in cost, because they do not add to data charges, and of not reducing performance by acting as overhead.

Alongside tests of likely performance, merit values can be adjusted according to arbitrary criteria, based on dynamic or static parameters, and obtainable by further tests or by receiving information from external sources. For example, to take cost into account, merit values can be adjusted without performing any tests at all.

Another type of embodiment would be to combine the advantages of active and passive tests by closely monitoring useful data sent by the router itself, or by its gateway, if it has one. For example, if the router reports data usage by each of its clients on the local network to a central server, the size of each such report and the time required to send it across a specific link can itself be used as a test of that link. If the router does operate with a gateway, the specific protocol needed to coordinate routing optimizations between the router and the gateway can be expanded to include mutual feedback on data sent and received since the last exchange, taking any negative discrepancies therein, or high latency, as a sign of trouble.

Yet another type of embodiment with respect to evaluation would be to take precise measurements of latency into account. Some networking applications are more sensitive to responsiveness than to bandwidth, one example being the loading of a web page containing only dozens of small resources, such as low-resolution images, CSS files and short scripts. In the optimization of performance for such applications, latencies significantly lower than the three-second floor used in the ICMP timeout example above are relevant. Therefore, merit values can be given a further adjustment according to the findings of the last few successful ICMP requests, the precise time needed to complete a DNS query, etc.

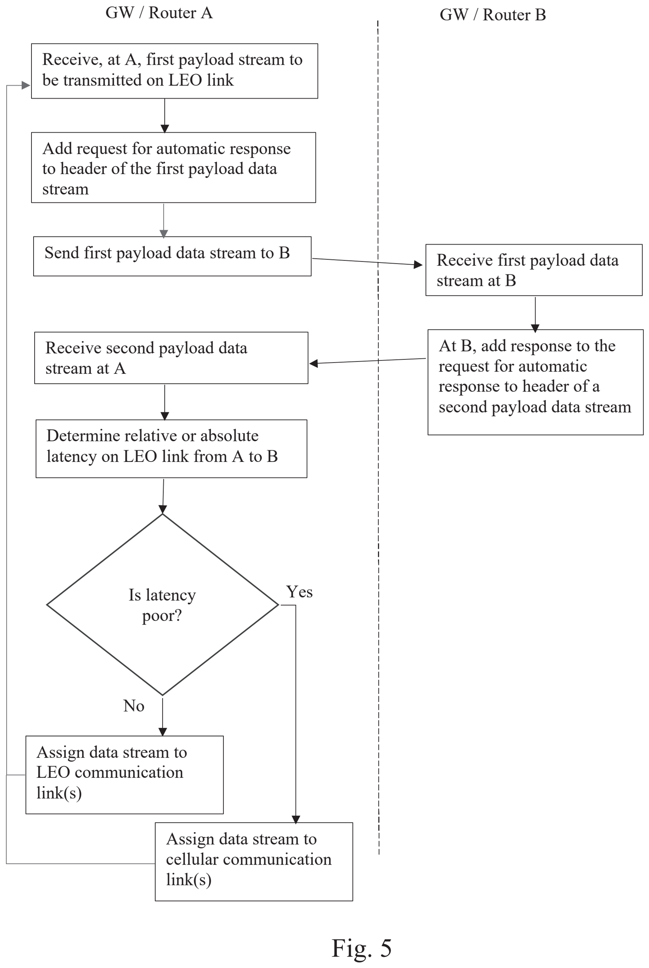

An embodiment using requests for triggering automated responses included in payload data is schematically illustrated in Fig. 5. Here, communication occurs between the aggregation server/gateway and a mobile router. In an embodiment, "A" may refer to the gateway, whereas "B" may refer to the mobile router. Alternatively, "A" may refer to the mobile router, and "B" may refer to the gateway. The method may also be performed simultaneously and in the same way in both the gateway and the mobile router.

In the illustrative example, a first payload stream to be transmitted on a LEO link is received at A, e.g. from onboard clients or from the internet. A adds a request for an automatic response to one or more headers of the first payload data stream, and the payload data stream is then sent to B. B receives the first payload data stream, and adds a response to the request for automatic response to a header of a second payload data stream, which is sent in the other direction, i.e. back to A. A receives the second payload data stream from B, and based on the response the current latency of the LEO link from A to B is determined. The latency may be determined as an absolute latency, or as a relative latency, i.e. in comparison with one or more previously determined latencies. It is determined whether the latency is acceptable or too poor, e.g. by comparing it to a predetermined or dynamic threshold value. If the latency is determined to be acceptable, data stream(s) may be assigned to the LEO communication link(s), whereas if the latency is found to be too poor, data streams may be assigned to cellular communication link(s).

The requests for triggering automated responses may in this way be added to every data stream, or every header used for the aggregation. This enable very fast, frequent and reliable determination of the latency in uplink, downlink or both. Latency may in this way be determined every few ms or less.

Moving on from the subject of link evaluation, there can also be numerous embodiments of the second part of the invention, which is to optimize the assignment of streams to data links. Given that the process of link evaluation produces scalar merit values for each link, the assignment can be accomplished by any of several very common shuffling and selection algorithms known in computer science, provided the requirements of the invention are met. For instance, treating merit values as fitness, a genetic algorithm may be applied, such as tournament selection, to choose a link for each new stream. However, the algorithm does not need to be literally random. It can be seeded with the array of key-value pairs formed by the set of links and their merit values, producing a deterministic system that is easier to troubleshoot.

In the case of fine-tuned evaluation for specific use cases, such as the precise measurements of latency mentioned above, an embodiment of this invention may attempt to determine the special needs of each new stream of traffic. For example, a stream that looks typical of voice over IP (VOIP), judging by its port numbers, its contents, or other factors, can be assigned to a link with especially low latency. A stream that looks typical of on-demand, non-live video streaming, which is less sensitive to latency, can be routed with emphasis on bandwidth. Such an embodiment of this invention may require several parallel implementations of its ideas, maintaining records of separate merit values for separate applications, and routing each stream according to the type of its source, however this knowledge is obtained.

The invention has now been described with reference to specific embodiments. However, several variations of the communication system are feasible. For example, any number of parallel links may be used, both for the LEO communication links and the terrestrial communication links. Further, the method may be performed and executed in the router, onboard the moving vehicle, in the stationary aggregation server, or both. Further, the control unit may be integrated with the router, and e.g. be realized by software within the controller of the router, or be arranged as one or several separate unit(s) connected to the router. Further, the communication system may be used on various types of vehicles.

Such and other obvious modifications must be considered to be within the scope of the present invention, as it is defined by the appended claims. It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting to the claim. The word "comprising" does not exclude the presence of other elements or steps than those listed in the claim. The word "a" or "an" preceding an element does not exclude the presence of a plurality of such elements. Further, a single unit may perform the functions of several means recited in the claims.

## Claims

1. A wireless communication system for wireless communication with a mobile router in a moving vehicle, such as a train, via at least two external wireless networks, a first external wireless network comprising a plurality of low earth orbit, LEO, satellites, and a second external wireless network enabling direct communication between said moving vehicle and terrestrial base stations,
wherein the mobile router is arranged, at least periodically, to simultaneously communicate with the two external wireless networks thereby providing at least two concurrently useable separate communication links: at least one LEO communication link provided through said first external wireless network and at least one terrestrial link provided through said second external wireless network;
the system further comprising an aggregation server, enabling aggregated communication between said mobile router and said aggregation server over said at least two communication links, the communication thereby at the end points appearing as a single link;
the system further comprising at least one controller being connected to, or arranged in, at least one of the mobile router and the aggregation server, the controller(s) being arranged to evaluate the quality of at least the LEO communication link(s), and to assign data streams to said communication links at least partly based on said evaluated quality, wherein said evaluated quality is at least one of latency and data packet loss, and the evaluation is based on measured times until automated responses are received from requests arranged to trigger determinable automated responses, where the requests are repeatedly sent from said aggregation server to said router and/or from said router to said aggregation server via said data links.

2. The wireless communication system of claim 1, wherein the assigning of data streams to said communication links is based solely on said evaluated quality.

3. The wireless communication system of claim 1 or 2, the controller(s) being arranged to evaluate the quality by comparing the latency and/or data packet loss to determined threshold level(s).

4. The wireless communication system of any one of the preceding claims, the controller(s) being arranged to solely assign data streams to the LEO communication link(s) unless the evaluated quality of the at least one LEO communication link is determined to be too low.

5. The wireless communication system of claim 3, the controller(s) being arranged to solely assign data streams to the LEO communication link(s) unless the evaluated quality of the at least one LEO communication link is determined to exceed said threshold level(s).

6. The wireless communication system of any one of the preceding claims, wherein a data packet loss is determined to have occurred when the measured times until automated responses are received from requests arranged to trigger determinable automated responses exceed a determined data packet loss threshold.

7. The wireless communication system of any one of the preceding claims, wherein the moving vehicle is a rail-bound vehicle, such as a train.

8. The wireless communication system of any one of the preceding claims, wherein the router is arranged to establish connection with the remote server via the LEO satellites over at least two separate LEO communication links.

9. The wireless communication system of claim 8, wherein the router is arranged to simultaneously communicate with LEO satellites via at least two operators, thereby providing separate LEO communication links.

10. The wireless communication system of claim 8 or 9, wherein the router is arranged to simultaneously communicate via at least two different LEO satellites, said at least two LEO satellites preferably being in communication with different terrestrial base stations, said LEO satellites preferably operated by the same operator.

11. The wireless communication system of any one of the preceding claims, wherein the requests triggering a determinable automated response are requests to a domain name system (DNS) server.

12. The wireless communication system of any one of the preceding claims, wherein the request triggering a determinable automated response uses the ICMP protocol.

13. The wireless communication system of any one of the preceding claims, wherein the request triggering a determinable automated response is included in payload data sent between the router and the aggregation server, and preferably included in a header added to the data packets for controlling the aggregation.

14. The wireless communication system of any one of the preceding claims, wherein the controller is further arranged to determine a merit value to each of said communication links, based on the evaluated quality of said communication links, wherein the assignment of data streams to the communication links is made in proportion, and preferably in linear proportion, to the determined merit values.

15. A method for wireless communication method between a mobile router in a moving vehicle, such as a train, and an aggregation server via at least two external wireless networks, a first external wireless network comprising a plurality of low earth orbit, LEO, satellites, and a second external wireless network enabling direct communication between said moving vehicle and terrestrial base stations, the method comprising:
providing at least two concurrently useable separate communication links: at least one LEO communication link provided through said first external wireless network and at least one terrestrial link provided through said second external wireless network;
enabling aggregated communication between said mobile router and said aggregation server over said at least two communication links, the communication thereby at the end points appearing as a single link;
evaluating the quality of at least the LEO communication link(s) in at least one controller, the controller(s) being connected to, or arranged in, at least one of the mobile router and the aggregation server, wherein said evaluated quality is at least one of latency and data packet loss, and the evaluation is based on measured times until automated responses are received from requests arranged to trigger determinable automated responses, where the requests are repeatedly sent from said aggregation server to said router and/or from said router to said aggregation server via said data links; and
assigning, by the controller(s), data streams to said communication links at least partly based on said evaluated quality.
